# EUROPÄISCHE PATENTANMELDUNG

(11) **EP 1 375 193 A1**
(43) Veröffentlichungstag der Anmeldung: **02.01.2004**
(21) Anmeldenummer: 02014005.9
(22) Anmeldetag: 26.06.2002
(51) Int. Cl.: B60B 7/00, B60B 7/04

(54) **Zweilagige Radkappe**

(71) Anmelder: Wang, Johnny, Tainan Hsien (TW)
(72) Erfinder: Wang, Johnny, Tainan Hsien (TW)
(74) Vertreter: Kador & Partner

(57) **Zusammenfassung**

Bei einer Radkappe für einen Standard-Reifen, die im wesentlichen eine Innenkappe 12 mit einer Anzahl von an ihrem Außenrand nach innen hineinragenden Zungen 125, von denen jede an ihrer Außenseite eine Rastrippe 127 zur Einrastung in einer Ringnut 32 der Felge 31 des Reifens 3 und an ihrer Innenseite eine Klammlippe 126 aufweist, und einen Drahtring 14, der in dem Klammlippen 126 gehalten ist, wird eine Quasi-Sport-Reifen-Erscheinung dadurch erreicht, daß die Radkappe 1 zusätzlich eine Außenkappe11 und eine Anzahl von Federelemente 13 aufweist, wobei die Außenkappe 11 allerseits radial über die Innerkappe 12 übersteht und an ihrer Innenseite mehrere nach innen hineinragenden Laschen 111 trägt, von denen jede eine Rastrippe 113 und mindest eine Hängeloch 112 für ein Ende 132 eines Federelements 13 aufwiest, dessen anderes Ende 131 an dem Drahtring 14 angehakt ist, und daß die Innenkappe 12 entsprechend den Laschen 111 mehrere Schlitze 122 aufweist, durch die jeweils die Laschen 111 hindurchgehen. Hierdurch wird ein Ausdruck einer Sport-Reifen in einfacher Weise ohne eine einwendige Anpassung in der Felge und Inkaufnahme der Einbuße in Bequemlichkeit ermöglicht.

## Beschreibung

Die Erfindung betrifR eine Radkappe, insbesondere eine zweilagige Radkappe, die einem mit ihr ausgesteten Standardreifen die Erscheinung eines Sportreifens verleiht.

Man unterscheidet nach der radialen Dünnheit oder dem "radialen Flachheitsverhältnis" Standard-Reifen und Sport-Reifen. Unter dem Begriff "radialen Flachheitsverhaltnis" ist ein Verhältnis der Ringbreite(d.h. der radialen Breite des Seitengummis) eines Reifens zu seinem außeren Radius oder das Verhältnis[(D―d)/ D] der Differenz ( D―d ) zwischen dem äußeren (D) und dem inneren Durchmesser (d) des Reifens zu seinem außeren Durchmesser(D) zu verstehen. Je größer das Flachheitverhältnis ist, um so dünner und flacher ist ein Reifen in seiner radialen Richtung. Bei Sportwagen weist der Reifen einen größeren inneren Durchmesser auf als ein Standard-Reifen für einen gewöhnlichen PKW mit dem gleichen äußeren Durchmesser, also die Felge für Sportwagen ist größer als die eines PKWs mit Standard-Reifen.

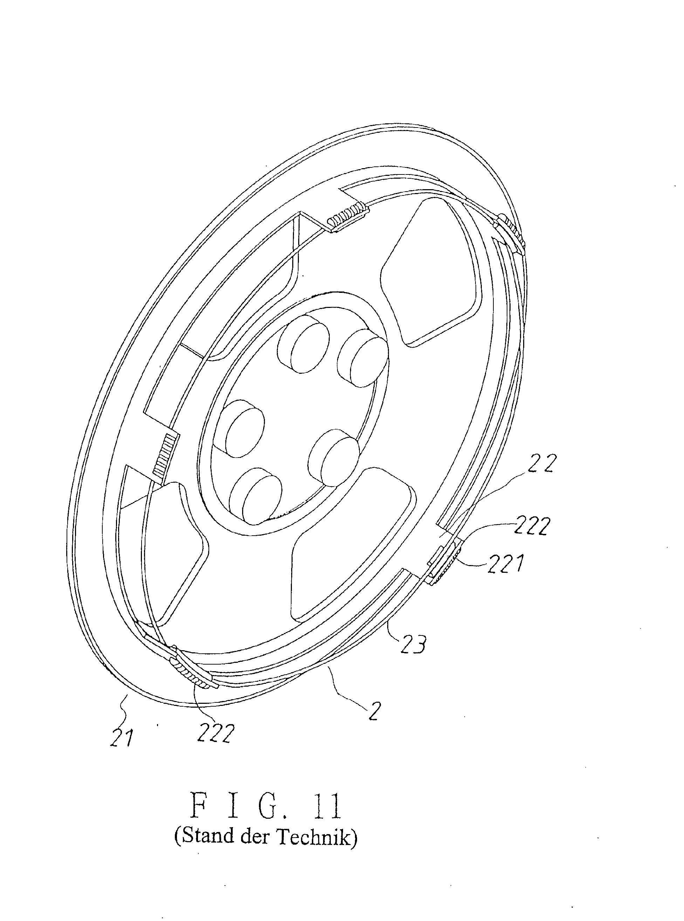

Eine typische bekannte Radkappe 2 geht aus Figur 11 hervor, die radial innerhalb ihres Umfangsrands 21 an ihrer Innenseite mehrere axial nach innen hineinragende Zungen 22 aufweist. Jede Zunge 22 weist an ihrer radialen äußeren Seite jeweils eine Rastrippe 222 zur federnden Einrastung in die Felge und an ihrer radialen inneren Seite eine Klammlippe 221 zur federnden Halterung eines Drahtring 23 darin aufweist.

Die Radkappe 2 dient hauptsächlich dem Zweck von Dekoration. Bei Sportwagen hat die Radkappe zwar infolge ihrer größeren Felge eine größere äußere Fläche , und damit den Vorteil größer ästhetischen Möglichkeiten ihrer Dekoration. Jedoch schließt die Notwendigkeit einer teueren Felge für einen Sport-Reifen wegen ihrer größeren radialen Abmessung und der für ihrer Herstellung erforderlichen, oft sehr teueren Leichtlegierung die häufigere Anwendung von Sporit-Reifen bzw. den Ersatz von Standard-Reifen durch Sport-Reifen zwecks ästhetischer Vielfältigkeit aus. Darüber hinaus ist bei Sport-Reifen trotz der vielfältigeren ästhetischen Möglichkeiten ihrer Radkappe nachteilig, daß das niedere radiale Flachheitsverhältnis von Sport-Reifcn zur Schwächung seiner Einfederung, und damit zur Verschlechterung seiner Dämpfungsfähigkcit zur Verringerung von Erschütterungen führt.

Demzufolge liegt der Erfindung die Aufgabe zugrunde, eine Radkappe für Standard-Reifen bereitzustellen, bei der eine mit dem Sport-Reifen vergleichbaren große Deckfläche für Dekorationszweck zur Verfügung steht, ohne dabei ein Umbau mit einer teueren Sport-Felge zu benötigen und damit eine verringerte Dampfungsfähigkeit im Kauf zu nehmen.

Die Aufgabe wird erfindungsgemäß dadurch gelöst,daß die Radkappc im Unterschied zu den bekannten Radkappen, die ausschließlich einlagig ausgebildet sind, zweilagig aus einer der Standard-Felge im wesentlichen deckungsgleichen und an dieser in gleicher Weise wie die Radkappe des Stands der Technik(d.h. mittels den ähnlichen Rastung) befestigten inneren Radkappe(Innenkappe) und einer diese überdeckende, in Deckungsflüche gegenüber dieser vergrößerten äußeren Radkappe (Außenkappe) besteht, wodurch erreicht wird, daß mit der Außenkappe eine Quasi-Sportreifen-Erscheinung mit vergrößerten Dekorationsfläche auf einfache Weise und kostengünstig ohne eine Anpassung in der vorhandenen Felge geschaffen wird, und trotzdem der eigentliche Vorteil ihrer guten Einfederung erhalten bleibt.

Um zu vermeiden, daß die Außenkappe durch ein bei einem erschütternden Fahren aus der in vertikalen Richtung ausgeübten Zusammendrückung in Querrichtung resultiertes starkes Herausstoßen des mit ihr in engen Berührung stehenden Reifens, das insbesondere beim Fahren auf einem unebenen Boden entsteht, von ihrer Halterung an der Innenkappe herausfallen kann, wird gemäß einer Weiterbildung der Erfindung vorgeschlagen, daß die Außenkappe über Federelemente, vorzugsweise Zugfedern, mit der Innenkappe verbunden und daran gehalten wird, wobei jedes Federelement an seinem äußeren Ende an einer an der Innenseite der Außenkappe angeformten, nach innen hineinragenden Lasche befestigt wird, die jeweils durch einen Schlitz an der Innenkappe hindurchgeht, und sich mit seinem inneren Ende am darin gehaltenen Drahtring anhakt. Dadurch wird erreicht, daß die Außenkappe bei einer seitlichen Verformung des Reifens unter Auspannung des Federelements synchron mit dem Seitengummi des Reifens nach außen hereausgestoßen wird und bei der Rückstellung des Reifens mit diesem in ihre ursprüngliche Stellung zurückkehrt. Infolgedessen bleibt die Außenkappe dank den Federelementen trotz ihrer vergrtißerten Deckungsfläche immer innig am Reifen anliegen. Demnach wird die Gefahr des Herausfallens der Außenkappe auch bei Fahren auf einem sehr unebenen Boden ausgeschlossen.

Ein weiterer Vorteil besteht darin, daß man durch die zwischen den Speichenstegen vorgesehenen Öffnungen der Außenkappe die darin an der Innenkappe angeordnete Bremsscheibe unmittelbar hineinsehen kann, wodurch der Ausdruck einer Sport-Reifen noch verstärkt wird, denn beim Sport-Reifen die bestückten Bremsen auschließlich dem Typ Scheibenbremse gehörig sind.

Nachfolgend wird die Erfindung anhand von in der Zeichnung dargestellten Ausführungsbeispielen näher erläutert. Es zeigt:

### [Zeichnung]

Figur 1 eine erfindungsgemäße Radkappe in perspektivischer Explosionsansicht,
Figur 2 eine Seitenansicht(oder Axialansicht) der erfindungsgemäßen Radkappe in normalen Stellung , gesehen in axialer Richtung von innen,
Figur 3 eine geschnitte Teilansicht eines mit einer Feder überbrückten Bereichs der Radkappe, gesehen in radialer Richtung, imvergrößenten Maßstab,
Figur 4 entsprechend Fig. 3 eine andere radiale Randansicht des Bereiches der Radkappe, aber in einer gegenüber Figur 3 um etwa 90 gedrehten Stellung,
Figur 5 eine radiale Ansicht einer an einer Felge eines Standard-Reifens montierten erfindungsgemäßen Radkappe,
Figur 6 entsprechend Fig. 5 eine Seitenansicht eines mit erfindungsgemäßer Radkappe ausgestatteten Standard-Reifens,
Figuren 7 und 8 einen PKW mit Standard-Reifen, wobei der Vorderrad mit einem herkömmliche einlagigen Radkappe und der Hinterrad mit einem erfindungsgemäßen doppellagigen Radkappe versehen ist,
Figur 9 eine Axialansicht des Standard-Reifen bei seinem Anfahren auf einem unebenen Boden,
Figur 10 entsprechend der Fig.3 eine Radialansicht aber im in Fig. 9 gezeigten seitlich verformten Zustand, und
Figur 11 eine bekannte Radkappe in perspektivischer Ansicht.

### [Erläuterung der Ausführungsbeispiele]

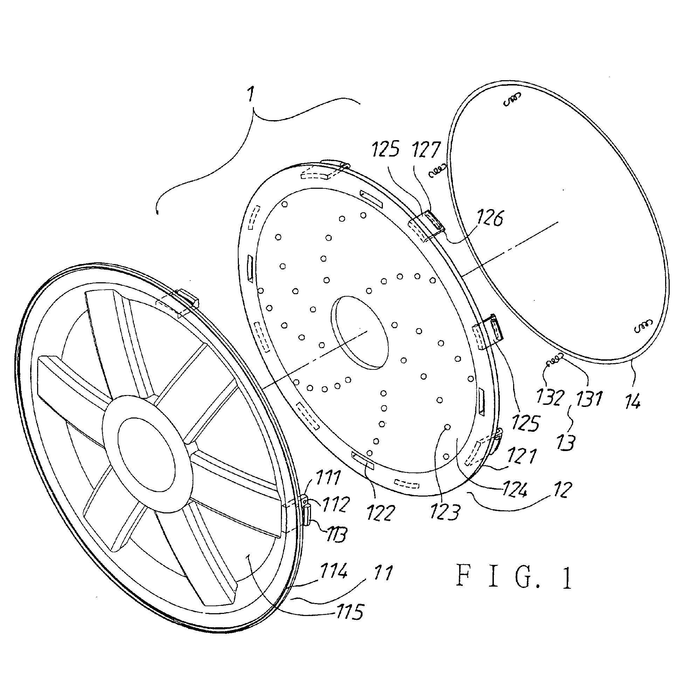

Figur 1 veranschaulicht eine erfindungsgemäße doppellagige Radkappe 1, die im wesentlich aus einem Außenkappe 11, einem Innenkappe 12, mehreren Federdlementen 13 , und einem Drahtring 14 besteht. Zwischen den benachbarten Speichenstegen weist die Außenkappe 11 Öffnungen 115 bzw. Fenster für das Einsehen der darin montierten Bremsscheibe 124 und der daran vorgesehenen Perforationen 123 auf, was den Ausdruck eines Sport-Reifens noch verstärken kann.

Die Außenkappe 11 weist an ihrer Innenseite mehrere über den Außenrand 114 mit gleichem Abstand voneinander angeordneten, nach innen hineinragenden Laschen 111 aufweist, von denen jede an ihrem Unterende ein Hängeloch 112 für ein jeweiliges Federelement 14 hat und an ihrer Außenseite eine Rastrippe 113 trägt. Die Außenkappe 11 weist eine gegenüber der Innenkappe 12 vergrößerte, radial allerseits über diese überstehende Deckungsfläche auf, die-den Innenrand des Reifens 3 überdeckt und damit der Radkappe 1 eine zusätzliche Dekorationsfläche anbietet.

Dagegen weist die Innenkappe 12 eine der konventionellen einlagigen Standard-Radkappe 2 deckungsgleiche Ausbildung auf, und gleichfalls an der Innenseite an ihrem Außenrand 121 zur Ankupplung mit einer Felge 31 mehrere äquidistant angeordneten, nach innen hineinragenden Zungen 125 trägt, von denen jede 125 an ihrer radialen Außenseite eine Rastrippe 125 zur Einrastung in einer entsprechenden Ringnut 32 der Felge und an seiner der Rasrrippe 125 abgewandten radialen Innerseite eine Klammuppe 126 zum Halten des Drahtrings 14 aufweist.

Im Unterschied zur bekannten einlagigen Radkappe 2 weist die Innenkappe 12 an ihrem Außenrand 121 entsprechend den Laschen 111 mehrere Schlitze 122 auf, durch die die Laschen 111 hindurchgesetzt und mit ihren Rastrippen 113 darin gegen ein Herausfallen gesichert werden. Darüber hinaus weist die Innenkappe 12 zum Zweck einer guten Lüftung eine Vielzahl von über die Bremsscheibe 124 verteilten Lüftungsperforationen 123 auf.

Vorzugsweise sind die Federelemente 13 Zugfedern, dessen beiden Ende hakenförmig ausgebilldet sind, wobei sich der Außenhaken 132 in einem Hängeloch 112 einer Lasche 111 einhakt, während der Inenhaken am Drahtring 14 gehakt wird, wodurch die Außenkappe 11 federnd und unlverlierbar an der Innenkappe 12 sichergehalten wird.

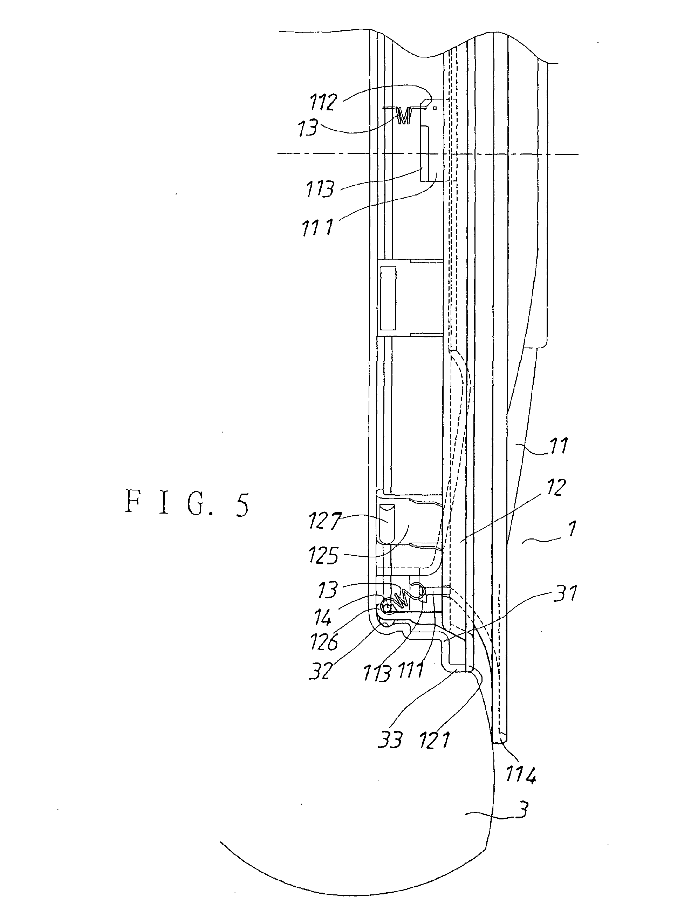

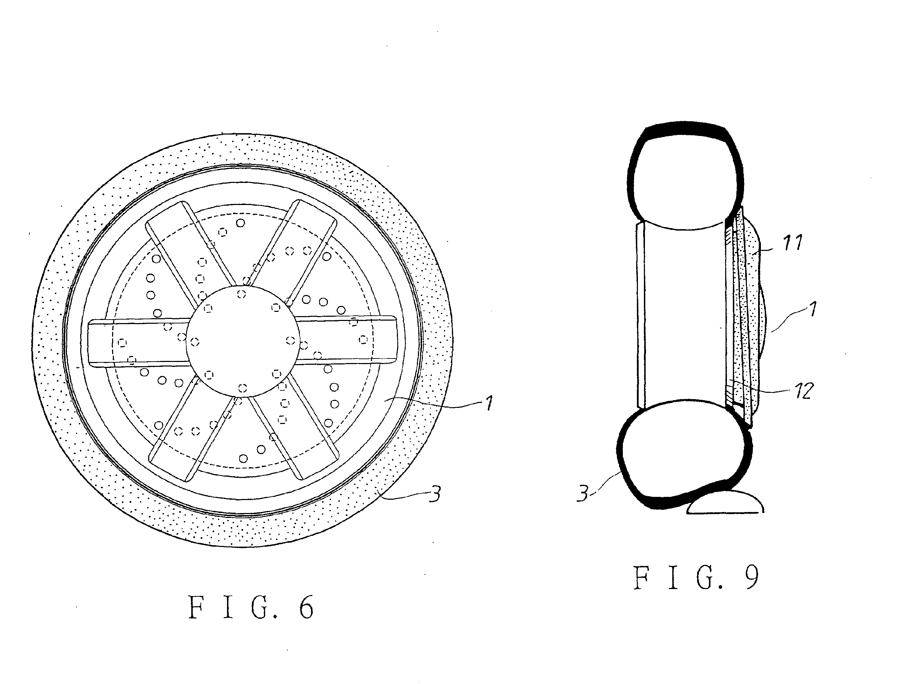

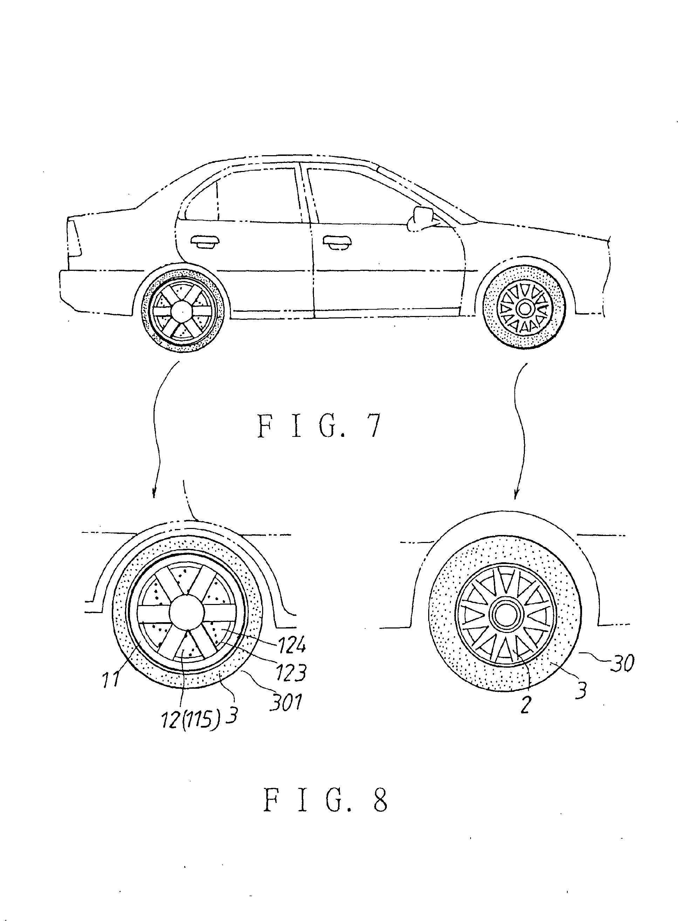

Aus Figuren 5 und 6 ist zu entnommen, daß die fertig zusammengebauten zweilagige Radkappe 1 nun in die Felge 31 eingepreßt werden kann, wobei die Innenkappe 12 mit ihren Rastrippen 127 in die Ringnut 32 der Felge 31 des Standard-Reifens 3 eingerastet wird und mit ihrer Außenrand 121 innig am Felgehorn 33 mit geeignetem, durch die Federelemente bedingtem Druck anliegt. Infolgedessen erhält die gesamte Radkappe 1 eine feste Verbindung mit dem Reifen 3. Wie aus Figuren 6 bis 8 ersichtlich ist, liegt die Außenkappe 11 mit ihrem Außenrand 114 am Reifen 3 an, was zur Folge einer Erscheinung eines Sport-Reifens hat, die ein kleineres Flachheitsverhältnis hat als Standard-Reifen. Der Ausdruck wird noch erhöht, indem man durch die Fenster 115 die darin liegende Scheibenbremse 124 und die daran vorgesehenen Perforationen 123 einsehen kann, die einen Sport-Reifen kennzeichnen. Daraus ergibt sich ein Standard-Reifen mit dem Stil eines Sport-Reifens, ohne dabei die Bequemlichkeit beim Fahren im Kauf genommen zu werden.

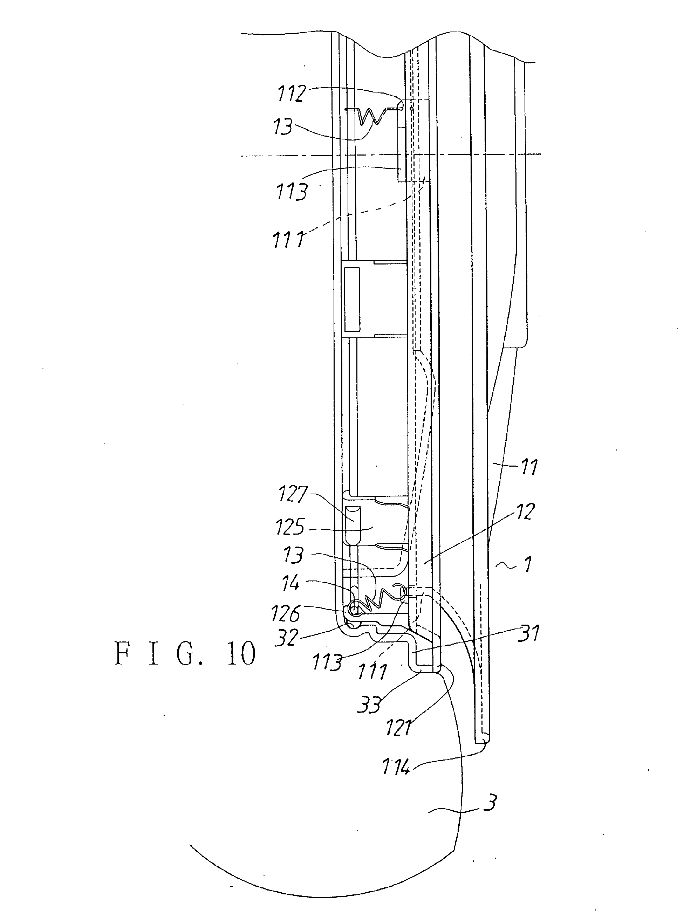

Wie aus Figur 9 hervorgeht, wenn ein mit der erfindungsgemäßen Radkappe 1 ausgerüsteten Standard-Reifen bei seinem Anfahren auf einem unebenen Boden mit dichten Vertiefungen bzw. Erhebungen einer starken radialen Kraft unterworfen wird, die zur einer schnellen seitlichen Verformung des Reifens, und damit einer Stoßbewegung nach außen führt, wird die Außenkappe 11 unter Ausspannung der Federelemente 13 der Federelemente mit dem Reifen 3 nach außen von der Innenkappe 12 leicht herabgehoben aber immer federnd innig am Reifen anliegen bleibt. Hierdurch wird erreicht, daß die Außenkappe immer synchron mit der Verformung des Reifens in Bewegung gebracht wird. Nachdem der Reifen seinen normalen unverformten Zustand zurückkehrt, nimmt die Außenkappe 11 wieder ihre ursprüngliche Stellung ein, ohne daraus eine Verlagerung davon resultiert.

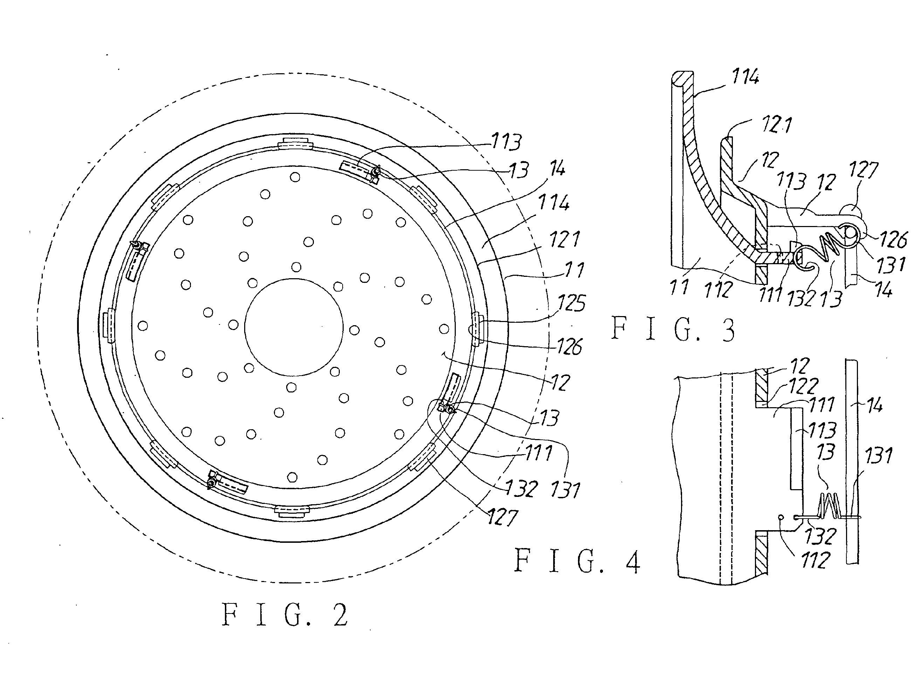

Wie aus Figuren 3 und 4 ersichtlich ist, kann die Lasche 111 mit mehreren Hängelöchern 112 versehen werden, wodurch eine Einstellung der Federkraft durch eine Wahl der eingehakten Loch 112 erfolgen kann.

Zum Entnehmen der doppellagigen Radkappe 1 aus der Felge greift man mit beiden Händen am Außenrand 114 des Außenkappe 11 und zieht sie nach außen(Figur 10). Nun drücken sich die Rastrippen 113 gegen die Wand der Schlitze 122 an, so erreichen die Federelemente 13 ihre maximale Verspannung und die Laschen können nicht weiter von den Schlitzen 122 herausgezogen. Da sowohl die Einrastung der Rastrippen 113 in den Schlitzen 112 als auch die Klammung des Drahtrings 14 in den Klammlippen 126 fester ausgebildet ist als die Einrastung der Rastrippen 127 in der Ringnut 32, wird bei einem weiteren Ausziehen der Außenkappe 11 nach außen mit erhöhter darauf ausgeübter Zugkraft die Rastrippen 127 der Innerkappe 12 von der Ringnut 32 der Felge 31 entkopplt und daher die gesamte zweilagige Radkappe 1 aus dem Reifen 3 demontiert.

Die Erfindung hat gegenüber dem Stand der Technik die folgenden Vorteile:
1) Die zweilagige Radkappe läßt sich unmittelbar an einem vorhandenen Reifen zum Ersatz der einlagigen Radkappe montieren, um eine sportreifenähnliche Erscheinung zu erhalten, ohne dafür einen mit erheblichem Aufwand verbundenen Umbau bzw. eine Anpassung daran zu erfordern.
2) Eine Quasi-Sport-Reifen-Erscheinung erfolgt ohne Ersatz des vorhandenen Standard-Reifen durch eine Sport-Reifen,und damit ohne Inkaufnahme der Bequemlichkeit.
3) Die federnde Halterung der Außenkappe ermöglicht ihre synchronisierten Bewegung mit der Verformung des Reifens. Infolgedessen wird die Gefahr des Herausfallens der Außenkappe bei Anfahren an einem unebenen Boden weitgehend vermieden.
4) Die zweilagige Radkappe aus der getrennt hergestellten und zwar aus Kunststoff bestehenden Außen- und Innenkappe ist gegenüber den bekannten einlagigen dünnen Radkappe robust aufgebaut.
5) Die Zusammenwirkung der Außenkappe mit vergrößertem Durchmesser zur Herstellung einer dem Sport-Reifen vergleichbaren Deckungsfläche und der in Abmessung ungeändert bleibenden Innenkappe zur Anpassung des vorhandenen Standard-Reifenöffs eröffnet erstmals die Möglichkeit der Kombination der Vorteile der beiden Arten von Reifen, nähmlich Standard- und Sport-Reifen.
6) Die bekannten einlagigen Radkappen von Standard- bzw. Sport-Reifen weisen nur sehr beschränkte Variatioinsmöglichkeiten in Auswahl ihrer Werkstoffe und Ausbildungen auf, da sie insgesamt der vorhandenen Felge anpassen müssen. Demgegenüber lassen sich bei der erfindungsgemäßen Radkappe die Außenkappe und die Innenkappe getrennt und voneinander unabhängig in ihren Formgebung bzw. Färbung und in ihren Werkstoffen auswählen, sofern ihre Laschen 111 und Schlitze 122 aneinander anpassen können. Daraus ergibt sich der Verteil einer großen Auswahl ihrer Ausbildungen und Werkstoffe, und damit insbesondere ihrer zahlreichen möglichen Kombinationen.
7) Die Öffnungen 115 erlauben ein Einsehen der darin angeordneten, die typischen Sport-Reifen kennzeichenden perforierten Scheibenbremse, was zur Folge einer Verstärkung des Ausdrucks von Sport-Reifen hat.
8) Die erfindungsgemäße Radkappe einem Standard-Reifen einen visuellen Effekt von Sport-Reifen verleiht, ohne daß eine aufwendige Umwandlung einer Felge aus teuerer Leichtmetall-Legierung erforderlich gemacht wird.
9) Die federnde Verbindung zwischen den beiden Kappen 11,12 nicht nur vermeidet die Gefahr des Herausfallen der Außenkappe, sondern vermindert den Verschlußund damit verlängert den Standzeit der Radkappe. Die Unabhängigkeit der Außenkappe von der Innenkappe in ihrer Ausbildungsmöglichkeiten vervielfältigt beträchtlich die Variationen der Reifen. Je nach dem Bedarf und den Arten der Reifen kann die Radkappe im Außendurchmesser ihrer Außenkappe entsprechend verändert werden, wodurch eine Anpassung an die verschiedenen Normen erreicht wird.

## Patentansprüche

1. Eine Radkappe , insbesondere für einen Standard-Reifen, die im wesentlichen eine Innenkappe 12 mit einer Anzahl von an ihrem Außenrand nach innen hineinragenden Zungen 125, von denen jede an ihrer Außenseite eine Rastrippe 127 zur Einrastung in einer Ringnut 32 der Felge 31 des Reifens 3 und an ihrer Innenseite eine Klammuppe 126 aufweist, und einen Drahtring 14, der in dem Klammuppen 126 gehalten ist, **dadurch gekennzeichnet, daß** die Radkappe 1 zusätzlich eine Außenkappell und eine Anzahl von Federelemente 13 aufweist, wobei die Außenkappe 11 allerseits radial über die Innerkappe 12 übersteht und an ihrer Innenseite mehrere nach innen hineinragenden Laschen 111 trägt, von denen jede eine Rastrippe 113 und mindest eine Hängeloch 112 für ein Ende 132 eines Federelements 13 aufwiest, dessen anderes Ende 131 an dem Drahtring 14 angehakt ist, und daß die Innenkappe 12 entsprechend den Laschen 111 mehrere Schlitze 122 aufweist, durch die jeweils die Laschen 111 hindurchgehen.

2. Radkappe nach Anspruch 1, **dadurch gekennzeichnet, daß** dic Außenkappe 11 mehrere zwishen ihren Speichenstegen freigelassenen Öffnungen 115 für ein Hineinsehen der darin liegenden Innenkappe 12 aufweist, und die Innenkappe 12 über eine Vielzahl von darauf verteilten Perforationen 123 für Lüftung verfügt, die die typische Scheibenbremse für Sport-Reifen kennzeichen.

3. Radkappe nach einem der Ansprüchen 1 und 2, **dadurch gekennzeichnet,daß** sowohl die Einrastung der Rastrippen 113 in den Schlitzen 112 als auch die Klammung des Drahtrings 14 in den Klammuppen 126 fester ausgebildet ist als die Einrastung der Rastrippen 127 in der Ringnut 32.

4. Radkappe nach einem der Ansprüchen 1 bis 3, **dadurch gekennzeichnet, daß** die Lasche 111 mindestens zwei Hängelöcher 112 aufweist, wodurch die Verspannung des Federelements 13 durch die Wahl der Hängeloch, in dem das Ende 132 eingehakt wird, veränderbar ist.

5. Radkappe nach einem der Ansprüchen 1 bis 4, **dadurch gekennzeichnet, daß** die Federelemente 13 Zugfedern sind.
